# EUROPÄISCHE PATENTSCHRIFT

(11) **EP 0 506 904 B1**
(45) Veröffentlichungstag und Bekanntmachung des Hinweises auf die Patenterteilung: **10.08.1994**
(21) Anmeldenummer: 91917857.4
(22) Anmeldetag: 18.10.1991
(51) Int. Cl.: B01D 19/00

(54) **VORRICHTUNG ZUM ELIMINIEREN VON CHLORIERTEN KOHLENWASSERSTOFFEN UND AROMATEN AUS WASSER**
DEVICE FOR ELIMINATING CHLORINATED HYDROCARBONS AND AROMATIC ORGANIC COMPOUNDS FROM WATER
DISPOSITIF POUR L'ELIMINATION D'HYDROCARBURES ET D'AROMATIQUES CHLORES DE L'EAU

(30) Priorität: 24.10.1990 AT 2146/90
(43) Veröffentlichungstag der Anmeldung: 07.10.1992
(73) Patentinhaber: SCHIFF & STERN KG, A-1111 Wien (AT)
(72) Erfinder: RIEDEL, Heinrich, A-1160 Wien (AT)
(74) Vertreter: Rippel, Andreas, Dipl.-Ing.
(86) Internationale Anmeldenummer: AT9100113
(87) Internationale Veröffentlichungsnummer: WO9207643

(56) Entgegenhaltungen:
- FR-A- 1 167 397
- US-A- 3 834 133
- US-A- 3 898 058

## Beschreibung

Die Erfindung bezieht sich auf eine Vorrichtung zum Eliminieren von chlorierten Kohlenwasserstoffen und Aromaten aus Wasser, mit einem Behälter, der Füllkörper enthält, über die das kontaminierte Wasser verteilt wird, wobei zur Aufrechterhaltung eines Unterdruckes im Behälter und zur Absaugung des dadurch entstehenden Dampf-Gasgemisches ein Vakuumaggregat angeordnet sowie zum Abziehen des gereinigten Wassers ein Ablauf vorgesehen ist.

Bei bekannten Vorrichtungen dieser Art, wie sie z.B. aus der US-A 3.898.058 bekannt geworden sind, wird das Dampf-Gasgemisch über einen oberhalb der Füllkörper angeordneten Auslaß abgesaugt. Die bekannten Vorrichtungen erzielen teilweise zwar bessere Ergebnisse als die ebenfalls bekannten Vorrichtungen zur Durchführung von Absorbtionsverfahren mit Aktivkohle bzw. Stripverfahren, jedoch sind die Ergebnisse immer noch nicht befriedigend.

Bei Vakuumdestillationsanlagen ist es bekannt, die Ebenen von Füllkörpern durch in den Behälter eingesetzte Zwischenböden zu bilden, die gelocht oder mit Gittern versehen sind. Die Absaugung kann dabei in der Ebene dieser Zwischenböden erfolgen, wobei noch zusätzliche Einbauten vorgesehen werden. Derartige Anordnungen sind sehr aufwendig.

Die Erfindung hat es sich daher zum Ziel gesetzt, eine Vorrichtung der eingangs genannten Art derart auszubilden, daß die Absaugung des Dampf-Gasgemisches verbessert und damit der Wirkungsgrad der Vorrichtung erhöht wird. Die Vorrichtung soll überdies sehr einfach aufgebaut sein. Erreicht wird dies dadurch, daß zur Absaugung des Dampf-Gasgemisches in mehreren Ebenen der Füllkörper in diese hineinragende gelochte Rohre vorgesehen sind.

Bei einer erfindungsgemäßen Vorrichtung erfolgt demnach die Absaugung des Dampf-Gasgemisches verteilt über die gesamte Füllkörperkolonne und es hat sich gezeigt, daß dadurch ein weit größerer Anteil des mit Schadstoffen angereicherten Dampf-Gasgemisches abgezogen werden kann.

Zweckmäßig sind die Löcher an der Unterseite der Rohre vorgesehen. Dadurch wird eine das Eindringen von Wasser verhindernde Abdeckung unnotwendig. Grundsätzlich kann bei einer erfindungsgemäßen Vorrichtung in jeder Ebene der Füllkörper nur ein gelochtes Rohr vorgesehen sein. Die Absaugung des Dampf-Gasgemisches kann jedoch noch weiter verbessert werden, wenn in einer Ebene der Füllkörper mindestens zwei gelochte Rohre vorgesehen sind.

Eine weitere Verbesserung der Absaugwirkung läßt sich erfindungsgemäß erreichen, wenn die an der Unterseite der Rohre vorgesehenen Löcher von der Vertikalmittelebene der einzelnen Rohre aus abwechselnd nach verschiedenen Seiten hin angeordnet sind.

Um den abzusaugenden Raum noch weiter zu erfassen, hat es sich ferner als zweckmäßig erwiesen, wenn die Löcher übereinander liegender Rohre gegeneinander versetzt sind.

Nachstehend ist die Erfindung an Hand von in den Zeichnungen dargestellten Ausführungsbeispielen näher beschrieben, ohne jedoch auf diese Beispiele beschränkt zu sein. Dabei zeigen:
Fig.1 einen schematischen Vertikalschnitt durch eine erfindungsgemäße Vorrichtung;
Fig.2 einen Schnitt nach der Linie II-II in Fig.1, wobei die Füllkörper weggelassen sind;
Fig.3 eine der Fig.2 entsprechende Darstellung mit drei nebeneinander liegenden Rohren;
Fig.4 einen Schnitt nach der Linie IV-IV in Fig.2 und
Fig.5 eine Ansicht in Richtung des Pfeiles V in Fig.4.

Eine erfindungsgemäße Vorrichtung weist einen Behälter 1 auf, der an seiner oberen Seite mit einem Zulauf 2 versehen ist, durch den das kontaminierte Wasser in einen Wasserverteiler 3 strömt. Der Wasserverteiler 3 hat die Aufgabe, das Wasser so über den Behälterquerschnitt zu verteilen, daß die darunter liegenden Füllkörper 4 gleichmäßig berieselt werden. Die Füllkörper 4 werden von einem Auflageboden 5 getragen, der in bekannter Weise mit Offnungen versehen ist, durch die das gereinigte Wasser über einen Ablauf 6 abfließen kann.

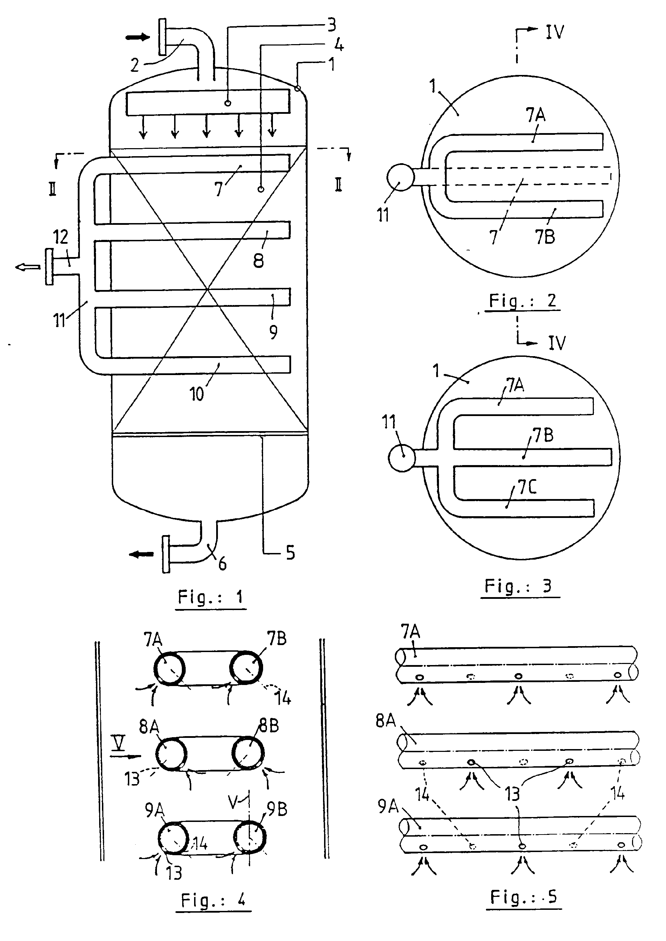

In die Füllkörper 5 ragen in mehreren Ebenen, beim Ausführungsbeispiel nach Fig.1 sind es vier Ebenen, gelochte Rohre 7, 8, 9 und 10 die über Verbindungen 11 an eine gemeinsame Absaugung 12 angeschlossen sind. Diese Absaugung 12 ist in bekannter Weise mit einem Vakuumaggregat (nicht dargestellt) verbunden, das im Normalfall aus einem Verdichter, einem Kondensator, und einer Vakuumpumpe besteht. Durch das Vakuumaggregat wird der Druck im Behälter 1 soweit reduziert, daß der Siedezustand beginnt. Der mit Schadstoffen angereicherte Wasserdampf wird dann über die gelochten Rohre 7, 8, 9, 10 in mehreren Ebenen der Füllkörper abgesaugt.

Wie in Fig.2 strichliert dargestellt ist, könnte in einer Ebene der Füllkörper nur ein Rohr, z.B. 7, vorgesehen sein. Um die Absaugung über den gegebenen Querschnitt des Behälters 1 besser zu verteilen, ist jedoch die gabelförmige Anordnung von zwei Rohren 7A und 7B möglich bzw. zweckmäßig.

Auch eine zinkenförmige Anordnung von drei Rohren 7A, 7B und 7C nach Fig.3 ist möglich. Dadurch wird der gegebene Querschnitt des Behälters 1 durch die Absaugung noch besser erfaßt.

Gemäß den Figuren 4 und 5 sind die an der Unterseite der Rohre vorgesehenen Löcher 13, 14 von der Vertikalmittelebene V der Rohre aus abwechselnd nach verschiedenen Seiten hin gerichtet. Die Löcher übereinander liegender Rohre sind gegeneinander versetzt. Es wird durch diese Anordnung eine besonders gleichmäßige Erfassung des gesamten durch die Füllkörper gefüllten Raumes ermöglicht und somit das Wasser-Dampfgemisch in optimaler Weise abgesaugt.

Im Rahmen der Erfindung kann die Form und Größe des Behälters, die Anzahl, Form und Größe der Rohre sowie der Löcher vielfältig variiert werden.

## Patentansprüche

1. Vorrichtung zum Eliminieren von chlorierten Kohlenwasserstoffen und Aromaten aus Wasser, mit einem Behälter (1), der Füllkörper (4) enthält, über die das kontaminierte Wasser verteilt wird, wobei zur Aufrechterhaltung eines Unterdruckes im Behälter und zur Absaugung des dadurch entstehenden Danpf-Gasgemisches ein Vakuumaggregat angeordnet sowie zum Abziehen des gereinigten Wassers ein Ablauf (6) vorgesehen ist, dadurch gekennzeichnet, daß zur Absaugung des Danpf-Gasgemisches in mehreren Ebenen der Füllkörper (4) in diese hineinragende gelochte Rohre (7,8,9) vorgesehen sind.

2. Vorrichtung nach Anspruch 1, dadurch gekennzeichnet, daß die Lochung (13,14) an der Unterseite der Rohre (7,8,9) vorgesehen ist.

3. Vorrichtung nach Anspruch 1 oder 2, dadurch gekennzeichnet, daß in einer Ebene der Füllkörper (4) mindestens zwei gelochte Rohre (7,8,9) vorgesehen sind.

4. Vorrichtung nach einem der Ansprüche 1 bis 3, dadurch gekennzeichnet, daß die an der Unterseite der Rohre (7,8,9) vorgesehenen Löcher (13,14) von der Vertikalmittelebene (V) der einzelnen Rohre (7,8,9) aus abwechselnd nach verschiedenen Seiten hin angeordnet sind.

5. Vorrichtung nach einem der Ansprüche 1 bis 4, dadurch gekennzeichnet, daß die Löcher (13,14) übereinander liegender Rohre (7,8,9) gegeneinander versetzt sind.

## Claims

1. Device for the elimination of chlorinated hydrocarbons and aromatic compounds from water, with a container (1) containing tower packing (4) for the distribution of the contaminated water, with a vacuum apparatus for maintaining low pressure in the container and drawing off the resulting steam-gas mixture by suction, and with an outlet (6) for drawing off the purified water, **characterized in that** perforated pipes (7, 8, 9) protuding into the tower packing (4) are provided to draw off the steam-gas mixture at several levels of the tower packing (4).

2. Device according to claim 1, **characterized in** **that** the perforation (13, 14) is located at the bottom of the pipes (7, 8, 9).

3. Device according to claims 1 or 2, **characterized in that** at least two perforated pipes (7, 8, 9) are provided on one level of the tower packing (4).

4. Device according to one of the claims 1 to 3, **characterized in that** the perforations (13, 14) located at the bottom of the pipes (7, 8, 9) alternatingly face in various directions extending from the vertical centre plane (V) of the individual pipes (7, 8, 9).

5. Device according to one of the claims 1 to 3, **characterized in that** the perforations (13, 14) of pipes (7, 8, 9) situated one atop the other are offset.

## Revendications

1. Dispositif pour l'élimination de hydrocarbures chlorés et aromatiques de l'eau, avec un réservoir (1) contenant des corps de remplissage (4) pour la distribution de l'eau comtaminée, avec un appareil à vide pour le maintien de vide partiel dans le récipient et pour l'aspiration du mélange vapeur-gaz, et avec une décharge (6) pour l'eau purifiée, **caracterisé en ce que** des tuyaux (7, 8, 9) perforés et qui saillissent dans les corps de remplissage (4) à plusieurs niveaux sont prévus pour l'aspiration du mélange vapeur-gaz.

2. Dispositif selon revendication 1, **caracterisé** **en ce que** les perforations (13, 14) sont prévues sur la face inférieure des tuyaux (7, 8, 9).

3. Dispositif selon revendication 1 ou 2, **caracterisé en ce qu'**au moins deux tuyaux perforés (7, 8, 9) sont prévus pour un niveau des corps de remplissage (4).

4. Dispositif selon l'une des revendications 1 à 3, **caracterisé en ce que** les perforations (13, 14) prévus à la face inférieure des tuyaux (7, 8, 9) sont arrangées vers différentes directions de façon alternante à partir du plan médian vertical (V) des tuyaux (7, 8, 9) individuels.

5. Dispositif selon l'une des revendications 1 à 4, **caracterisé en ce que** les perforations (13, 14) des tuyaux (7, 8, 9) positionnés l'un au-dessus de l'autre sont décalées les unes par rapport aux autres.
